(19) Europäisches Patentamt
European Patent Office
Office européen des brevets

(11) **EP 1 898 056 A1**

(12) **DEMANDE DE BREVET EUROPEEN**

(43) Date de publication:
**12.03.2008 Bulletin 2008/11**

(51) Int Cl.:
**F01K 23/10** (2006.01)  **F22D 1/00** (2006.01)

(21) Numéro de dépôt: **06447103.0**

(22) Date de dépôt: **05.09.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(71) Demandeur: **Cockerill Maintenance & Ingenierie S.A.**
**4100 Seraing (BE)**

(72) Inventeur: **Dethier, Alfred**
**4140 Sprimont (BE)**

(74) Mandataire: **Lerho, Marc J. A.**
**pronovem - Office Van Malderen**
**Bd. de la Sauvenière 85/043**
**4000 Liège (BE)**

(54) **Dispositif d'extraction de chaleur du condensat préchauffé du cycle à vapeur d'un cycle combiné**

(57) La présente invention se rapporte à une installation de génération de vapeur à récupération de chaleur, du type à cycle combiné, comprenant un préchauffeur de condensat (1) dans le cycle de vapeur, venant du condenseur et retournant à un réservoir d'alimentation, ledit préchauffeur (1) étant situé dans un flux de gaz chaud et présentant une entrée (C) pour recevoir de l'eau du condenseur à une première température et une sortie (D) pour fournir de l'eau préchauffée à une seconde température à la conduite de retour au réservoir, ainsi que des moyens pour réguler les deux températures précitées, lesdits moyens comprenant une conduite de recirculation (2) de l'eau préchauffée de ladite sortie (D) vers ladite entrée (C), caractérisé en ce qu'un échangeur de chaleur supplémentaire (8) est monté sur ladite conduite de recirculation (2), pour réaliser une extraction de chaleur en faveur d'un circuit extérieur.

Fig. 2

Printed by Jouve, 75001 PARIS (FR)

**Description**

**Objet de l'invention**

La présente invention se rapporte à un dispositif d'extraction de chaleur original utilisant un préchauffeur de condensat existant dans une installation de génération de vapeur à récupération de chaleur.
L'invention concerne également le procédé de mise en oeuvre du dispositif.

**Arrière-plan technologique et état de la technique**

*Le cycle combiné*

Une centrale thermique à cycle combiné est une installation de production d'électricité combinant une turbine à gaz et une turbine à vapeur. Dans ce type de centrale, un combustible fossile, gaz naturel ou parfois du fuel, est brûlé dans la turbine à gaz, entraînant un premier générateur d'électricité. Les gaz rejetés à l'atmosphère de cette turbine à gaz, importants en volume et riches en énergie calorifique, sont récupérés dans une chaudière dite de récupération pour produire de la vapeur sous pression qui entraîne, par l'intermédiaire de la turbine à vapeur, un second générateur d'électricité.
La turbine à gaz peut être une variante de moteur à réaction jusqu'à 50 MW mais doit être un moteur industriel pour l'obtention de puissances supérieures, qui vont jusqu'à 300 MW actuellement.
Afin de maintenir la température de flamme dans des limites acceptables, la turbine à gaz fonctionne avec de larges excès en air et produit une grande quantité de gaz brûlés à une température relativement importante, de l'ordre de 600°C.
Cette grande quantité de gaz brûlés est convertie en vapeur dans un générateur de vapeur à récupération de chaleur (HRSG pour *Heat Recovery Steam Generator),* afin d'actionner une turbine à vapeur dans un cycle de vapeur classique produisant également de la puissance électrique. La puissance de sortie de la turbine à vapeur s'élève à 50-60% de la puissance de sortie de la turbine à gaz.
Le rendement total d'un cycle combiné de dernière génération s'élève à 60% environ.

*Le HRSG*

Pour récupérer le plus de chaleur possible, avec le meilleur rendement possible, le HRSG comporte habituellement 2 ou 3 niveaux de pression et un circuit de réchauffage de sorte que le HRSG génère 2 ou 3 sorties de vapeur à différentes pressions, qui alimentent la turbine à vapeur.
A l'extrémité de la chaudière, un préchauffeur de condensat est généralement installé, pour récupérer de la chaleur résiduelle contenue dans le gaz rejeté à l'atmosphère, grâce à un préchauffage des condensats venant de la sortie du condenseur de vapeur et avant l'entée de ceux-ci dans le réservoir d'alimentation en eau.

*Le préchauffeur de condensat*

Le préchauffeur de condensat reçoit de l'eau venant de la sortie du condenseur, c'est-à-dire de l'eau à basse température (une trentaine de degrés). Cependant, d'une part cette eau ne peut entrer directement dans le préchauffeur, sous peine que les tubes du préchauffeur ne soient à une température inférieure au point de rosée du gaz (typiquement 45-50°C), ce qui provoque de la condensation et partant une corrosion rapide de ces tubes. D'autre part, la température de l'eau quittant le préchauffeur ne peut pas être trop élevée mais doit être limitée à une valeur donnée, située en dessous de la température imposée au réservoir d'eau d'alimentation, de manière à permettre à l'ensemble réservoir/désaérateur de dégazer efficacement l'eau d'alimentation.
Le préchauffeur en tant que tel est donc soumis à deux contraintes :

- assurer une température d'eau donnée minimale à l'entrée de l'échangeur ;
- assurer une température d'eau donnée maximale à la sortie de celui-ci.

Ces deux contraintes d'ajustement de température sont généralement résolues au moyen d'une pompe de recirculation et d'une conduite de dérivation. Ainsi les deux contraintes peuvent être satisfaites tout en contrôlant le flux de recirculation d'eau et le flux d'eau de dérivation.
Dans une centrale à cycle combiné, par ailleurs, le gaz naturel approvisionnant la chaudière à gaz est acheminé par pipe-line à haute pression (typiquement 70 bar). Celui-ci doit donc être détendu avant son utilisation (typiquement à 25-30 bar). Cette réduction de pression provoque en même temps le refroidissement du gaz. Selon l'état de la technique, on connaît l'utilisation d'une chaudière auxiliaire externe, par exemple à fuel, générant de la vapeur ou de l'eau chaude dans un échangeur auxiliaire qui permet de réchauffer le gaz détendu avant son injection dans la turbine à gaz.

### Buts de l'invention

La présente invention vise à fournir un dispositif qui permette de s'affranchir des inconvénients de l'état de la technique.

En particulier, l'invention a pour but, dans une installation de production d'électricité à cycle combiné, de supprimer et remplacer la chaudière auxiliaire à combustible fossile alimentant l'échangeur qui sert à réchauffer le gaz naturel détendu utilisé par la turbine à gaz.

De plus, l'invention a pour but de récupérer de la chaleur résiduelle de manière régulée sur l'installation existante, au-niveau du préchauffeur de condensat.

L'invention a encore pour but un fonctionnement plus économique des installations de type HRSG.

### Principaux éléments caractéristiques de l'invention

Un premier objet de la présente invention concerne une installation de génération de vapeur à récupération de chaleur, du type à cycle combiné, comprenant un préchauffeur de condensat dans le cycle de vapeur, venant du condenseur et retournant à un réservoir d'alimentation, ledit préchauffeur étant situé dans un flux de gaz chaud et présentant une entrée pour recevoir de l'eau du condenseur à une première température et une sortie pour fournir de l'eau préchauffée à une seconde température à la conduite de retour au réservoir, ainsi que des moyens pour réguler les deux températures précitées, lesdits moyens comprenant une conduite de recirculation de l'eau préchauffée de ladite sortie vers ladite entrée, caractérisée en ce qu'un échangeur de chaleur supplémentaire est monté sur ladite conduite de recirculation, pour réaliser une extraction de chaleur en faveur d'un circuit extérieur.

De préférence, une conduite de dérivation est montée en parallèle sur la conduite de recirculation entre lesdits points d'entrée et de sortie du préchauffeur.

Avantageusement, la conduite de recirculation est munie d'une pompe.

Un second objet de la présente invention concerne un procédé pour contrôler une absorption de chaleur par l'échangeur de chaleur supplémentaire monté sur la conduite de recirculation associée au préchauffeur de condensat dans un installation de génération de vapeur à récupération de chaleur, du type à cycle combiné, telle que décrite ci-dessus, ladite conduite- de recirculation permettant de réguler la température de l'eau à l'entrée et à la sortie du préchauffeur, caractérisé en ce que ladite absorption de chaleur dans l'échangeur supplémentaire est contrôlée mutatis mutandis par la variation du débit d'eau par la conduite de recirculation à travers le préchauffeur de condensat.

### Brève description des figures

La figure 1 représente schématiquement la partie d'une installation à cycle combiné selon l'état de la technique, allant de la sortie du condenseur à l'entrée du désaérateur/réservoir, comprenant notamment un préchauffeur de condensat.

La figure 2 représente schématiquement l'installation de la figure 1 avec ajout d'un système d'extraction de chaleur selon la présente invention.

### Description détaillée de l'invention

Le système d'extraction de chaleur selon la présente invention donne un moyen d'extraire une plus grande quantité de chaleur du préchauffeur de condensat, sous la forme d'eau chaude utilisable quelque part dans l'usine, par exemple pour le chauffage du gaz naturel combustible à la station réductrice de pression, pour le chauffage de bâtiments, pour le traçage de tuyauteries, pour le chauffage d'un quartier, etc.

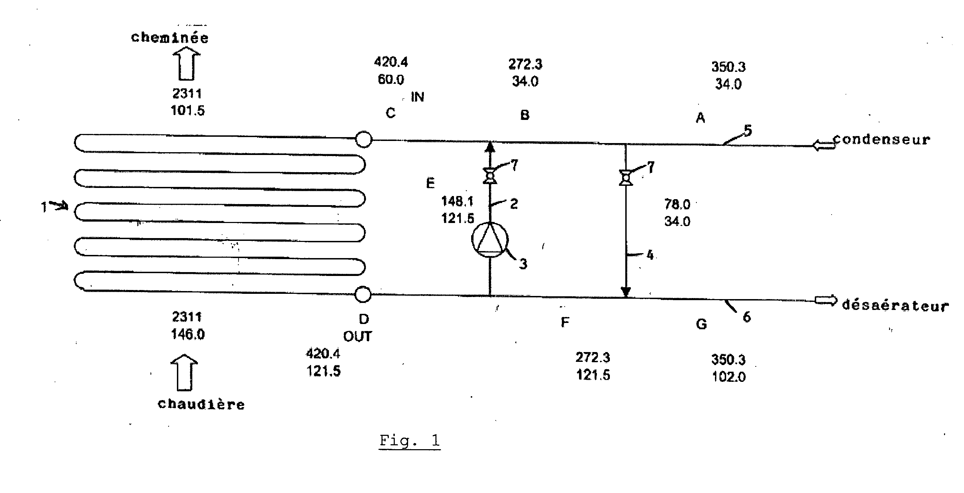

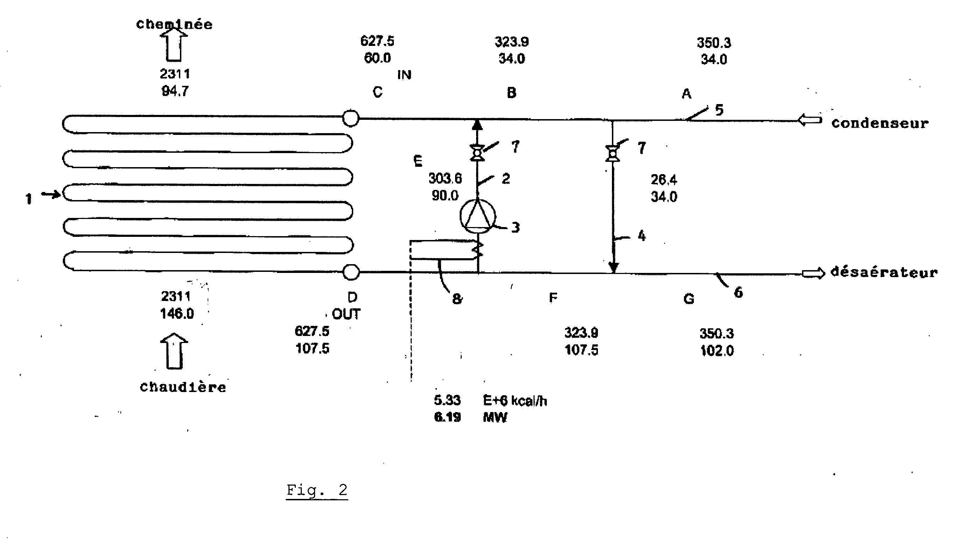

Le système d'extraction de chaleur selon l'invention est représenté sur la figure 2, où un échangeur de chaleur additionnel est incorporé, en modifiant l'état de la technique représenté sur la figure 1.

La figure 1 montre un exemple de forme d'exécution selon l'état de la technique, dans lequel la conduite d'eau 5 venant du condenseur donne au point C dans le préchauffeur de condensat 1, qui se trouve dans le flux de gaz brûlés rejetés à l'atmosphère. A la sortie D du préchauffeur de condensat 1, l'eau réchauffée retourne par la conduite 6 au réservoir via le désaérateur. En parallèle entre l'entrée C et la sortie D du préchauffeur de condensat, se trouve la conduite de recirculation 2 munie d'une pompe 3 (sens de l'eau FB : de la sortie D vers l'entrée C) et la conduite de dérivation 4 (sens de l'eau AG : de l'entrée C vers la sortie D). Chacune de ces deux conduites est munie d'une vanne 7 permettant la mise hors service. Sur la figure 2, on a ajouté l'échangeur additionnel 8, extracteur de chaleur, selon l'invention. Ces deux conduites permettent la régulation de température aux points d'entrée C et de sortie D du préchauffeur de condensat.

Selon l'invention, on tire un avantage des principes de contrôle installés initialement avec le préchauffeur de condensat (température en entrée et sortie par exemple), bien que la révision de certains équipements puisse être requise.

Le principe d'extraction de chaleur est le suivant : tout en refroidissant l'eau de recirculation dans la tuyauterie de recirculation 2, on doit augmenter le flux de recirculation d'eau pour satisfaire la première contrainte du préchauffeur de condensat, c'est-à-dire une température d'eau minimale à l'entrée du préchauffeur.

Cette augmentation de flux possède les deux effets :

- de diminuer la température de l'eau de sortie en D, avec la conséquence que la différence de température logarithmique entre le gaz et l'eau augmente et que l'échange de chaleur augmente ;
- d'augmenter la vitesse de l'eau à l'intérieur des tubes, ce qui augmente légèrement le coefficient d'échange de chaleur.

Le refroidissement de l'eau de recirculation à travers un échangeur génère l'extraction de chaleur.

Le caractère innovant de la présente invention ne réside pas dans les boucles de contrôle pour la température d'entrée et de sortie, qui existent dans le préchauffeur de condensat, ni dans l'échangeur de chaleur additionnel. L'invention réside dans l'idée de l'augmentation du flux d'eau à travers l'échangeur de chaleur situé dans le flux de gaz qui augmente la chaleur absorbée par celui-ci, en association avec un échangeur de chaleur additionnel, extérieur à la chaudière, qui permet l'extraction de chaleur au profit d'un circuit extérieur.

**Description d'une forme d'exécution préférée de l'invention**

EXEMPLE

En guise d'exemple, la figure 1 montre schématiquement une installation à cycle combiné typique, comprenant une turbine à gaz de 240 MW, avec préchauffeur de condensat. La figure 2 montre l'ajout d'un système d'extraction de chaleur à cette installation existante selon la présente invention. Les calculs ont été effectués en utilisant la formule de l'échange thermique :

$$Q = K.S.DT_{\log} = K.S.\frac{\Delta T_{grand} - \Delta T_{petit}}{\ln\dfrac{\Delta T_{grand}}{\Delta T_{petit}}} \ ,$$

où Q est l'échange chaleur, K le coefficient d'échange (pratiquement constant, voir ci-dessus), S la surface d'échange (constante) et $DT_{\log}$ la différence de température logarithmique entre le gaz et l'eau (tenant compte du plus grand et du plus petit écart gaz-eau). En ce qui concerne les valeurs chiffrées sur les figures, le nombre supérieur indique le débit (en tonnes/heure) et la valeur inférieure la température (en °C).

*Préchauffeur de condensat, tel qu'existant (figure 1)*

L'eau condensée est régulée à 60°C à l'entrée C du préchauffeur ; la température de sortie de l'eau en D est régulée à 122°C. Le transfert de chaleur du préchauffeur de condensats atteint 25,9 x 10^6 kcal/heure et la température des fumées (cheminée) est égale à 101,5°C.

*Avec le système d'extraction de chaleur (figure 2)*

Un refroidisseur 8 a été ajouté au niveau de la conduite 2 de la pompe de recirculation. Les deux contraintes du préchauffeur de condensat sont toujours satisfaites. Le transfert de chaleur du préchauffeur de condensat atteint maintenant 29,9 x 10^6 kcal/heure, ce qui donne une chaleur extraite nette de 5,33 x 10^6 kcal/heure ou 6,19 MW. La température de cheminée est réduite jusqu'à 94,7°C.

Dans le cas où le flux de dérivation 4 est nul sans extraction de chaleur, le bénéfice est similaire mais le bilan de chaleur complet doit être réalisé pour montrer les résultats. Dans cet exemple, un flux de dérivation a été introduit pour une compréhension plus simple du principe.

**Revendications**

1. Installation de génération de vapeur à récupération de chaleur, du type à cycle combiné, comprenant un préchauffeur de condensat (1) dans le cycle de vapeur, venant du condenseur et retournant à un réservoir d'alimentation, ledit préchauffeur (1) étant situé dans un flux de gaz chaud et présentant une entrée (C) pour recevoir de l'eau du condenseur à une première température et une sortie (D) pour fournir de l'eau préchauffée à une seconde température à la conduite de retour au réservoir, ainsi que des moyens pour réguler les deux températures précitées, lesdits moyens comprenant une conduite de recirculation (2) de l'eau préchauffée de ladite sortie (D) vers ladite entrée (C), **caractérisée en ce qu'**un échangeur de chaleur supplémentaire (8) est monté sur ladite conduite de recirculation (2), pour réaliser une extraction de chaleur en faveur d'un circuit extérieur.

2. Installation selon la revendication 1, **caractérisée en ce qu'**une conduite de dérivation (4) est montée en parallèle sur la conduite de recirculation (2) entre lesdits points d'entrée (C) et de sortie (D) du préchauffeur (1).

3. Installation selon la revendication 1 ou 2, **caractérisée en ce que** la conduite de recirculation (2) est munie d'une pompe (3).

4. Procédé pour contrôler une absorption de chaleur par l'échangeur de chaleur supplémentaire (8) monté sur la conduite de recirculation (2) associée au préchauffeur de condensat (1) dans un installation de génération de vapeur à récupération de chaleur, du type à cycle combiné, selon la revendication 1, 2 ou 3, ladite conduite de recirculation (2) permettant de réguler la température de l'eau à l'entrée (C) et à la sortie (D) du préchauffeur (1), **caractérisé en ce que** ladite absorption de chaleur dans l'échangeur supplémentaire (8) est contrôlée mutatis mutandis par la variation du débit d'eau par la conduite de recirculation (2) à travers le préchauffeur de condensat (1).

EP 1 898 056 A1

cheminée

420.4        272.3        350.3
60.0         34.0         34.0
2311         IN
101.5     C          B                    A        5        condenseur

7                    7

E
148.1                    78.0
121.5    2                34.0

3        4

2311         D                                       6        désaérateur
146.0     OUT
          420.4        272.3        350.3
          121.5        121.5        102.0

chaudière

Fig. 1

cheminée

627.5          323.9                   350.3
60.0           34.0                    34.0
                IN
2311
94.7            C           B               A        5        ⇐ condenseur

                        E
                        303.6   2
                        90.0            26.4
1 →                             34.0
                            3
                                        4

2311                                             6     ⇒ désaérateur
146.0           D           F           G
               OUT
                627.5       323.9       350.3
                107.5       107.5       102.0

                    8
chaudière

                    5.33    E+6 kcal/h
                    6.19    MW

Fig. 2

**Office européen des brevets**

**RAPPORT DE RECHERCHE EUROPEENNE**

Numéro de la demande

EP 06 44 7103

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br><br>Y | EP 1 199 445 A (SIEMENS AG [DE])<br>24 avril 2002 (2002-04-24)<br><br>* figures 1,2 *<br>* alinéas [0001], [0014], [0026], [0031] *<br>----- | 1,2,4<br><br>1-4 | INV.<br>F01K23/10<br>F22D1/00 |
| X<br><br>Y | DE 195 12 466 C1 (SIEMENS AG [DE])<br>22 août 1996 (1996-08-22)<br><br>* figure 1 *<br>* colonne 1, ligne 58 - ligne 66 *<br>* colonne 5, ligne 23 - ligne 32 *<br>----- | 1-4<br><br>1-4 | |
| X<br><br>Y | EP 1 205 641 A2 (MITSUBISHI HEAVY IND LTD [JP]) 15 mai 2002 (2002-05-15)<br><br>* figure 1 *<br>* abrégé *<br>----- | 1,3,4<br><br>1-4 | |
| Y | WO 96/36792 A (SIEMENS AG [DE]; BRUECKNER HERMANN [DE]; SCHMID ERICH [DE])<br>21 novembre 1996 (1996-11-21)<br>* figure 1 *<br>* page 2, ligne 30 - ligne 36 *<br>----- | 1-4 | **DOMAINES TECHNIQUES RECHERCHES (IPC)**<br><br>F01K<br>F22D |

Le présent rapport a été établi pour toutes les revendications

| Lieu de la recherche | Date d'achèvement de la recherche | Examinateur |
|---|---|---|
| Munich | 18 juillet 2007 | Lepers, Joachim |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 44 7103

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-07-2007

| Document brevet cité au rapport de recherche | | Date de publication | Membre(s) de la famille de brevet(s) | | Date de publication |
|---|---|---|---|---|---|
| EP 1199445 | A | 24-04-2002 | CN | 1447878 A | 08-10-2003 |
| | | | WO | 0233225 A1 | 25-04-2002 |
| | | | JP | 2004515673 T | 27-05-2004 |
| | | | US | 2004011019 A1 | 22-01-2004 |
| DE 19512466 | C1 | 22-08-1996 | CN | 1182467 A | 20-05-1998 |
| | | | WO | 9631685 A1 | 10-10-1996 |
| | | | EP | 0819209 A1 | 21-01-1998 |
| | | | ES | 2133945 T3 | 16-09-1999 |
| | | | IN | 186548 A1 | 29-09-2001 |
| | | | JP | 3784413 B2 | 14-06-2006 |
| | | | JP | 11503211 T | 23-03-1999 |
| | | | RU | 2152527 C1 | 10-07-2000 |
| | | | US | 6041588 A | 28-03-2000 |
| EP 1205641 | A2 | 15-05-2002 | CA | 2357595 A1 | 13-05-2002 |
| | | | JP | 2002147205 A | 22-05-2002 |
| | | | US | 2004003583 A1 | 08-01-2004 |
| WO 9636792 | A | 21-11-1996 | CN | 1183825 A | 03-06-1998 |
| | | | EP | 0826096 A1 | 04-03-1998 |
| | | | ES | 2125725 T3 | 01-03-1999 |
| | | | IN | 188521 A1 | 12-10-2002 |
| | | | JP | 11505585 T | 21-05-1999 |
| | | | RU | 2152521 C1 | 10-07-2000 |
| | | | US | 6089013 A | 18-07-2000 |

EPO FORM P0460

Pour tout renseignement concernant cette annexe : voir Journal Officiel de l'Office européen des brevets, No.12/82